# NEW EUROPEAN PATENT SPECIFICATION

(11) **EP 0 326 704 B2**
(45) Date of publication and mention of the opposition decision: **10.01.2001**
(45) Mention of the grant of the patent: 10.05.1995
(21) Application number: 88121425.8
(22) Date of filing: 21.12.1988
(51) Int. Cl.: C08L 75/04, C08G 18/10, C08G 63/68, C08L 67/00, C08L 101/02, C08L 101/00

(54) **Polymeric compositions**
Polymermischungen
Compositions de polymères

(30) Priority: 05.01.1988 US 140851
(43) Date of publication of application: 09.08.1989
(60) Divisional application: 94116484.0
(73) Proprietor: NORTON COMPANY, Worcester, MA 01606-2698 (US)
(72) Inventor: Comert, Ahmet, B-4655 Chaineux (BE); Ladang, Michel, B-4651 Herve (BE); Petit, Dominique, B-4512 Housse-Blegny (BE)
(74) Representative: Zimmermann, Gerd Heinrich

(56) References cited:
- EP-A- 0 293 602
- DE-A- 2 401 320
- FR-A- 2 259 146
- US-A- 3 834 578
- US-A- 4 022 745
- US-A- 4 107 131
- US-A- 4 627 859
- Brochure "Kraton Thermoplastic Rubber", Shell Chemical Co.
- D. J. Walsh, J. S. Higgins and A. Maconnachie: Polymer Blends and Mixtures, Martinus Nijhoff Publishers, Dordrecht/NL 1985, pages 196, 197, 204, 205
- Kunststoff-Handbuch, Band VII, Polyurethane, Carl Hanser Verlag München 1966, pages 24-28
- H.-G. Elias: Makromoleküle, 4th ed., Hüthig & Wepf Verlag, Basel/CH 1981, pages 163-166, 739-740, 1014-1016 and 1018-1019
- Kirk-Othmer: Encyclopedia of Chemical Technology, 3rd ed., vol. 8, John Wiley & Sons, New York 1979, pages 534-539 and 608-611
- W. Hofmann: Kautschuk-Technologie, Gentner Verlag, Stuttgart/Germany, 1980, pages 112-113, 116-126 and 207-213
- G. Habenicht: Kleben, Grundlagen, Technologie, Anwendungen, Springer Verlag Berlin/Germany, 1986, pages 28-30 and 410-411
- S. S. Schwartz and S. H. Goodman: Plastics Materials and Processes, Van Nostrand Reinhold Co., New York, 1982, pages 443-444

## Description

This invention relates to synthetic polymeric foamed materials exhibiting elastomeric behavior and especially suitable for use as sealants, gaskets, moisture resistant electrically insulating encapsulants, sheet stock and the like.

A wide variety of natural and synthetic rubbers and other elastomers have been used in the prior art for sealing applications generally. For example, Japanese Laid Open Application 59-213,786 published Dec. 2, 1984 discloses compositions comprising 100 parts by weight of urethane foam impregnated with 20-90 parts by weight of a mixture of (a) styrene-butadiene or styrene-isoprene block copolymers, (b) bituminous material and an organic solvent, and, optionally, (c) paraffinic or aromatic hydrocarbon oils, silicon water-repellents and/or defoaming agents, and inorganic fillers.

Japanese Laid Open Application 58-215,334 published Dec. 14, 1983 discloses a "water-swelling sealant" comprising a rubber or plastic compound blended with water swelling polyurethane resin. This blend is mixed with an organic peroxide, molded or extruded to any desired shape, then heated at 100-200 C to provide a durable water-swelling sealant.

Japanese Laid Open Application 57-092,078 published June 8, 1982 discloses a sealing material comprising a urethane polymer including a polydiene chain in the molecule and having terminal isocyanate groups; this is mixed with a compound containing active hydrogen. This mixture is eventually cured by urethane reaction to form the final elastomer.

The general possibility of polymer blends constituting interpenetrating polymer networks or IPN's has been known since 1969. Work in this field is summarized in the Encyclopedia of Polymer Science and Technology, Supplement Volume 1. The primary practical improvement reported by use of such IPN's has been increased toughness of elastomers and plastics.

The foams produced by the present invention are made by blending at least two components: (a) a generally non-reactive thermoplastic synthetic polymer with at least moderate flexibility, i.e. a noncrosslinkable elastomer, namely a styrene-butadiene-styrene block copolymer, and (b) a polymer or oligomer having isocyanate end groups capable of reaction with one another under the influence of atmospheric moisture, e.g. 10-100% relative humidity for at least 5 minutes, such as polyesters or polyethers or polybutadienes terminated with isocyanate end groups. The materials are extruded into the desired shape in which they are to be finally used while being protected from exposure to moisture or other active hydrogen containing compounds. The shaped article of the materials is then allowed to undergo further reaction under the influence of moisture such as liquid water or ambient moisture, producing what is believed to be an essentially thermoset IPN structure with excellent resistance to environmental degradation. The blend of materials may be stored in covered drum like containers or sealable plastic bags in a single large mass, or in pellet form for later processing into the desired final product; again here the blend of materials must be protected from moisture during storage.

Optional components of the materials according to this invention include plasticizers, accelerators for the cross linking reaction, surfactants, and fillers.

### DESCRIPTION OF THE PREFERRED EMBODIMENTS

The compositions used in the present invention fabricate end products which are substantially foamed due to the time, temperature and amount of moisture to which the compositions are subjected. If the compositions are low in viscosity and exposed to high humidity and temperature e.g. 80 C, then the resulting cured products are highly foamed with relatively large pores or cells. On the other hand if the viscosity of the compositions is high, the humidity and temperature low, e.g. 23 C, then the resulting products will be essentially non-foamed. In the case where the thermosettable prepolymer reacts through isocyanate group, the end product will always have some degree of foaming or porosity but if the viscosity of the initial mixture of moisture curable and non-crosslinkable elastomer is high, the temperature and humidity low, then the resulting product will have less total porosity and the porosity will be very fine, giving the product the properties of an essentially nonfoamed material. In addition to time, temprature, relative humidity, and viscosity the amount of cross linkable groups present and the thickness of the piece being fabricated play a roll in the properties of the end product. A sheet 0.5 mm thick containing 1.24% free isocyanate groups will fully cure in boiling water in 5 minutes; a 12 mm thick piece will fully cure in 3 weeks exposed to 35-60% relative humidity at room temprature. However, the minimum amount of isocyanate, or other functional group, should be at least about 1% by weight. In addition to sheet material or tape, other commercial products may be fabricated from the compositions of the invention. Ideally suited are such products as sealing gaskets for drum covers, tubing, and sealant-encapsulants about electrical connectors. The compositions of the present invention are also adapted for use in all conventional hot melt adhesive end uses, and as a double sided adhesive tape before it is cured. When the uncured hot melt adhesive or the uncured tape is in place, atmospheric moisture cures the thermosettable component of the mixture resulting in a thermoset flexible adhesive joint with its attendant advantages over the more conventional hot melt adhesives and mounting tapes.

One of the preferred non-reactive components of the materials according to this invention is a styrene-butadiene-styrene block copolymer available commercially under the name Cariflex TR-1102 from Shell Chimie, Wesseling, W. Germany. Cariflex TR-1102 has a density of 0.94.Mg,m³ at 23 C; a fluidity index of 6 g/10 min, measured by ASTM method D1238-65 T Condition "G"; a viscosity of 1200 centipoises (hereinafter cp) in 25 % solution in toluene at 25 C, measured by Brookfield viscometer Model LFV with spindle 3 at 6 revolutions per minute (hereinafter rpm); a styrene:butadiene weight ratio of 28:72; an extension of rupture of 880% at 33 megapascals (hereinafter MPa) rupturing force, a modulus of 2.9 MPa at 300% extension, and a Shore A (30 seconds) durometer value of 70.

The preferred reactive component is made by reacting a commercially available polyester material, Dynacoll RP 230 from Dynamit Nobel Chemicals, with a commercially available polyether prepolymer having residual isocyanate groups, Basonat PA 440 from BASF chemicals, in amounts to give a ratio of isocyanate groups to hydroxyl groups of 2.15. Dynacoll RP 230 has a glass transition temperature of -30 C, an OH number of 30 mg of KOH per gram, and viscosities (in Pa seconds) of 40 at 60 C, 10 at 80 C, and 4 at 100 C. Basonat PA 440 has 11 ± 1 % isocyanate groups, a viscosity cf 4.0 ± 0.5 Pa sec at 23 C, and a density of 1.09 Mg/m³. In addition to such polyether prepolymers, essentially any molecule carrying two or more isocyanate groups will form the desired polyurethane with any amine or hydroxyl terminated polyester, polyether butadiene, or the like. Examples of such polyisocyanate are paraphenylene diisocyanate, trans-1,4-cyclohexane diisocynate, 3-isocyanate-methyl-3,3,5-trimethylcyclohexylisocyanate, diphenylmethane diisocyanate, and toluene diisocyanate. When these diisocyanates are used the non-crosslinkable elastomer component of the combination preferably has a molecular weight of from 600 to 5000. A complete silicone prepolymer with trialkoxysilyl end groups is also within the scope of the invention.

Compositions made with some of these preferred materials are illustrated in Examples 1-24 below.

### Examples 1-24

In addition to the two components described above, many of these compositions contained Enerpar 10, a paraffinic oil available from BP Belgium, Antwerp. Some characteristics of this oil are: 0.874 specific gravity at 15.5 C; kinematic viscosities of 18.5 centistokes and 3.7 centistokes at 40 C and 100 C respectively; 8 % aromatic type carbon atoms, 28 % napthenic carbon atoms, and 64 % paraffinic type carbon atoms; and 65.3 weight % saturates, 34.4 weight % aromatics, and 0.3 weight % polar compounds. Table 1 shows the proportions by weight of the three components and the amount of unextractable material from the cured composition. In Table 1, only the weight of Dynacoll RP 230 is considered, but the actual mixtures also contained Basonat PA 440 in the proportion to Dynacoll as stated above, i.e., the weight of Basonat used is given by (2.15) (368) (1870) times the weight of Dynacoll used. (In this formula, 368 is the equivalent weight per NCO group in Basonat and 1870 is the equivalent weight per OH group in Dynacoll.

The method of measuring the amount of unextractable material, as shown in Table 1, was as follows: A sample of the composition shown, after thorough mixing and blending in conventional equipment for blending elastomers, was submerged in boiling water for one hour to assure complete moisture stimulated cross linking. A precisely weighed portion of the boiled composition was placed in a container made of 200 mesh screen and suspended in a boiler, arranged so that a rapid flow of refluxing toluene through the screen and over the sample occurred. The undissolved portion of the sample was removed after one hour of exposure to the refluxing solvent, freed of solvent by heating, and again weighed. The percent unextracted is one hundred times the ratio of the weight of the extracted sample to the weight of the original sample.

Cured compositions with good resistance to high temperature and solvents were obtained from all compositions in Table 1 with 50 % or more unextractables content after curing. If the amount of unextractable material in a cured composition exceeds the amount of Dynacoll and Basonat contained in that composition, it is believed that an IPN would be formed by that compositon after curing.

**TABLE 1**

| EXAMPLES OF COMPOSITIONS ACCORDING TO THIS INVENTION | | | | |
|---|---|---|---|---|
| Example No. | Weight Percents of Composition | | | Weight Percent Unextractable |
| | Cariflex | Dynacell | Enerpar | |
| 1 | 17.5 | 17.5 | 65.0 | 8 |
| 2 | 10.0 | 35.0 | 55.0 | -* |
| 3 | 40.0 | 10.0 | 50.0 | 4 |
| 4 | 25.0 | 25.0 | 50.0 | 49 |
| 5 | 0.0 | 50.0 | 50.0 | 80* |
| 6 | 15.0 | 42.5 | 42.5 | 43 |
| 7 | 24.0 | 36.0 | 40.0 | 6 |
| 8 | 15.0 | 50.0 | 35.0 | 60 |
| 9 | 33.3 | 33.3 | 33.3 | 50 |
| 10 | 65.0 | 10.0 | 35.0 | 12 |
| 11 | 50.0 | 25.0 | 25.0 | 43 |
| 12 | 25.0 | 50.0 | 25.0 | 65 |
| 13 | 10.0 | 65.0 | 25.0 | 81 |
| 14 | 0.0 | 75.0 | 25.0 | 88 |
| 15 | 66.0 | 17.0 | 17.0 | 58 |
| 16 | 42.0 | 42.0 | 16.0 | 52 |
| 17 | 33.0 | 50.0 | 17.0 | 60 |
| 18 | 17.0 | 66.0 | 17.0 | 24 |
| 19 | 60.0 | 27.0 | 13.0 | 42 |
| 20 | 10.0 | 80.0 | 10.0 | 90 |
| 21 | 85.0 | 7.5 | 7.5 | 3 |
| 22 | 80.0 | 20.0 | 0.0 | 54 |
| 23 | 65.0 | 35.0 | 0.0 | 82 |
| 24 | 50.0 | 50.0 | 0.0 | 77* |

| | | | | |
|---|---|---|---|---|
| *Indicates incompatibility of blend observed. | | | | |

Composition 13 from Table 1 may be taken as a typical example of a practically useful composition. Its complete composition in parts by weight was 100 parts Cariflex, 250 parts Enerpar, 650 parts Dynacoll, and 275 parts Basonat. Its cure in the form of a 1 mm thick sheet, under typical conditions of use, specifically at 23 C and 44 % relative humidity in static air is indicated in Table 2. For this table, the percent unextractable was measured by the same technique as for Table 1, except that the composition was not boiled with water before the measurements.

**Table 2**

| KINETICS OF MOISTURE STIMULATED CURE OF EXAMPLE 13 | |
|---|---|
| Time of Exposure to Moist Air | Weight % Unextractable |
| None | 0 |
| 16 hours | 12 |
| 23 hours | 16 |
| 42 hours | 62 |
| 66 hours | 64 |
| 6 days | 70 |

### Example 25

This example illustrates the manufacture of a sealant tape or sheet using a composition according to this invention. The ingredients in parts by weight were: 1000 Cariflex 1102; 1600 Enerpar 10; 500 titanium dioxide pigment; 1000 finely powdered calcium carbonate filler; 50 of phenolic type antioxidant (specifically Irganox 1520 supplied by Ciba Geigy was used); 5 benzoyl chloride, 6000 Dynacoll RP 320, and 3268 Basonat PA 440.

The product was made in a vacuum type kneader mixer (also called Z blade mixer), which was provided with two counter rotating Z shaped blades that were capable of thoroughly mixing even viscous elastomers with one another. The mixing space was steam jacketed, and the temperature of the materials mixed could be controlled between 80 and 160 C by regulating the steam pressure in the mixer jacket.

The temperature in the mixer was held at about 100 C. Into the mixer were placed 35.6 kg of Dynacoll RP 230. A vacuum of -0.6 bar was applied to the mixer chamber, while mixing was taking place, and held at that negative pressure and 100 C for 30 minutes to remove any moisture present in the hydroxyl terminated polyester. The vacuum was then terminated and 19.4 kg of Basonat PA 440 polyether prepolymer, i.e. isocyanate terminated polyether, were added to the mixer all at one time and mixing was renewed for about 3 hours while the mixer chamber was being purged with nitrogen. The thusly manufactured prepolymer was then unloaded into sealable silicone coated containers and stored in a dry environment at room temperature.

The mixer was thoroughly cleaned and preheated to 160 C. To the preheated mixer were added 4.1 kg of Cariflex 1102, 2 kg of titanium dioxide, 0.2 kg Irganox 1520, 4.1 kg of Calibrite and 1 kg of Enerpar 10 which were blended until all materials were homogeneously mixed. Then incremental quantities of 1.6, 2 and 2 kg of Enerpar 10 were added to the mix with mixing after each increment. Finally, 0.02 kg of benzoyl chloride was added and the entire batch mixed for an additional 10 minutes, the temperature reduced to 100 C, and 38 kg of the polyester-polyurethane prepolymer were added and mixed for 30 minutes.

After completion of mixing, the composition was unloaded, while hot enough to flow readily, through the screw fitting at the bottom of the mixer chamber into drums filled with carbon dioxide, to protect the composition from contact with atmosphere moisture. The upper surface of the composition in the drum was covered with a silicone coated polyester protective film and a humidity absorber pack was placed atop the protective film within the drum. The drum was then covered with a tight cover for storage and/or shipping.

To make tape, material prepared as described above was extruded through a screw extruder between two silicone coated polyester films and flattened to a thickness of 1 mm. The flattened extrudate without the protective film was then exposed to 100 % relative humidity in air in a controlled humidity chamber at 60 C for two hours, causing it to cure and foam. This cured and foamed tape was suitable for direct use as a sealant. Some of its physical properties are shown in Table 3.

**Table 3**

| CHARACTERISTICS OF SEALANT TAPE PRODUCT FROM EXAMPLE 31 | | | | |
|---|---|---|---|---|
| Density: | 529 kg/m³ | | | |
| Force to compress by 30%: | 77 kPa | | | |
| Tensile strength: | 480 kPa | | | |
| Elongation at break: | 276 % | | | |
| Weight % unextractable in boiling toluene for 1 hour: | 92 | | | |
| | --- | | | |

| | -20 C | 23 C | 50 C | 70 C |
|---|---|---|---|---|
| Compression set at: | 0% | 0% | 11.5% | 17% |
| | --- | | | |

| Adherend | Peel Adhesion of Tape at 23 C. N/cm | | | |
|---|---|---|---|---|
| Polypropylene | 0.2 | | | |
| ABS | 2.3 | | | |
| Poly (vinyl chloride) | 12.5 | | | |
| Polyurethane | >15 | | | |
| Aluminum | 2.5 | | | |
| Polyethylene | 4.5 | | | |
| Polyamide | 0.5 | | | |
| Polystyrene | 0.3 | | | |
| Polycarbonate | 15.0 | | | |

The low compression set of this tape at room temperature is particularly outstanding and useful. For comparison, the compression set of four commercial types of sealant foams are shown in Table 4.

**Table 4**

| COMPRESSION SET VALUES FOR SOME COMPARATIVE SEALANTS | | |
|---|---|---|
| Sealant Type | Percent Compression Set at: | |
| | 23 C | 70 C |
| Ethylene-propylene-diene monomer foam | 14 | 40 |
| Polyurethane foam I | 10 | 45 |
| Polyurethane foam II | 9 | 15.5 |
| Polyurethane foam III | 2 | 14.5 |
| Foam I is Fermapor K 31 - 2440 - RFB | | |
| Foam II is Fermapor K 31 - 2200 - RFB | | |
| Foam III is Fermapor K 31 - 2100 - RFB | | |

## Claims

1. A polymeric foamed composition formed from a mixture comprising:
(a) a first component which is a styrene-butadiene-styrene block polymer and is a noncross-linked elastomer that is not substantially chemically reactive with itself or with the second component (as recited below) in the presence of moisture;
(b) a second component which is a primary polymer having isocyanate end groups that are capable of chemically reacting with each other in the presence of moisture to form a derivative polymer having a longer average chain length than said primary polymer;
whereby the foamed composition is formed by intimately mixing said first and second components, extruding the resulting mixture and exposing said mixture to moisture to form an essentially thermoset foam.

2. A foamed composition according to claim 1, wherein said second component has a polyester backbone and isocyanate groups.

3. A foamed composition according to claim 1 or 2, in the form of a sheet or tape.

4. A foamed composition according to claim 1 or 2, in the form of tubing.

5. A foamed composition according to claim 1 or 2, in the form of a gasket.

## Patentansprüche

1. Geschäumte Polymerzusammensetzung, gebildet aus einer Mischung, umfassend:
a) eine erste Komponente, die ein Styrol-Butadien-Styrol-Blockpolymer ist und ein nicht-vernetztes Elastomer darstellt, welches mit sich selbst oder mit der zweiten Komponente (wie nachstehend angegeben) in Gegenwart von Feuchtigkeit im wesentlichen nicht chemisch reaktiv ist;
b) eine zweite Komponente, die ein primäres Polymer mit Isocyanatendgruppen ist, welche dazu befähigt sind, in Gegenwart von Feuchtigkeit miteinander chemisch zu reagieren, um ein Polymerderivat mit einer längeren durchschnittlichen Kettenlänge als das primäre Polymer zu bilden;
wobei die geschäumte Zusammensetzung durch inniges Mischen der ersten und zweiten Komponente gebildet, die entstehende Mischung extrudiert und die Mischung Feuchtigkeit ausgesetzt wird, um einen im wesentlichen duroplastischen Schaum zu bilden.

2. Geschäumte Zusammensetzung gemäß Anspruch 1, wobei die zweite Komponente ein Polyestergerüst und Isocyanatgruppen aufweist.

3. Geschäumte Zusammensetzung gemäß Anspruch 1 oder 2, in Form einer Folie oder eines Bandes.

4. Geschäumte Zusammensetzung gemäß Anspruch 1 oder 2, in Form eines Rohres.

5. Geschäumte Zusammensetzung gemäß Anspruch 1 oder 2, in Form einer Dichtung.

## Revendications

1. Composition polymère expansée formée depuis un mélange comprenant :
a) un premier composant qui est un polymère séquencé styrène/butadiène/styrène et qui est un élastomère non réticulé qui n'est sensiblement pas chimiquement réactif avec lui-même ou avec le deuxième composant (cité ci-dessous) en présence d'humidité ;
b) un deuxième composant qui est un polymère principal ayant des groupes terminaux isocyanate qui sont capables de réagir chimiquement l'un avec l'autre en présence d'humidité pour former un polymère dérivé et ayant une longueur de chaîne moyenne plus longue que ledit polymère principal ;
dans laquelle la composition expansée est formée en mélangeant intimement ledit premier et ledit deuxième composant, en extrudant le mélange résultant et en exposant ledit mélange à l'humidité pour former une mousse essentiellement thermodurcissable.

2. Composition expansée selon la revendication 1, dans laquelle le deuxième composant possède un squelette polyester et des groupes isocyanate.

3. Composition expansée selon la revendication 1 ou 2, sous forme de feuille ou de bande.

4. Composition expansée selon la revendication 1 ou 2, sous forme de tube.

5. Composition expansée selon la revendication 1 ou 2, sous forme de joint d'étanchéité.
